# EUROPEAN PATENT SPECIFICATION

(11) **EP 2 645 905 B1**
(45) Date of publication and mention of the grant of the patent: **21.12.2016**
(21) Application number: 11788193.8
(22) Date of filing: 15.11.2011
(51) Int. Cl.: A47G 19/22

(54) **LIQUID-DISPENSING CONTAINER WITH SINGLE GIMBAL MECHANISM**
AUSGABEBEHÄLTER FÜR FLÜSSIGKEITEN MIT EINZELKARDANMECHANISMUS
RÉSERVOIR DISTRIBUTEUR DE LIQUIDE DOTÉ D'UN MÉCANISME À SUSPENSION À CARDAN UNIQUE

(30) Priority: 19.11.2010 GB 201019626
(43) Date of publication of application: 09.10.2013
(73) Proprietor: HandSteady Limited, Stow-cum-Quy Cambridge CB25 9AL (GB)
(72) Inventor: PEACOCK, Christopher, Cambridge CB25 9AL (GB)
(86) International application number: PCT/GB2011/001601
(87) International publication number: WO 2012/066279

(56) References cited:
- CA-A- 852 984
- DE-U1-202008 000 979
- GB-A- 2 434 737
- NL-A- 8 403 131
- US-A1- 2007 012 707
- US-B1- 6 269 949

## Description

### BACKGROUND OF THE INVENTION

### 1. FIELD OF THE INVENTION

The present invention relates to a household liquid-dispensing container, such as a drinking vessel, flask or jug, comprising a vessel that is configured to hold a liquid and that has a base on which it can stand, an opening and at least one side; and, a handle that is configured to be held by a user and that is attached to a side of the vessel by a joint that forms a single gimbal between the handle the vessel and that allows the handle to pivot about a single axis that extends directly above the centre of gravity of the vessel when the vessel base is standing on a horizontal surface.

### 2. BACKGROUND OF THE INVENTION

People experience difficulty when drinking from conventional liquid-dispensing containers, such as a drinking vessel, for many different reasons. People with tremor struggle to hold drinking vessels steady in mid-air; develop lower back pain when leaning over to drink from drinking vessels with straws in that are standing on a horizontal surface; and, develop neck pain when tilting their head back in order to connect their mouth with straws positioned in drinking vessels that are held in mid-air. People with arthritis, joint pain and limited dexterity and limited strength, struggle to control the tilting of a drinking vessel in conjunction with absorbing the liquid container's weight; and, also experience pain when drinking due to having to tilt wrist and neck. People with difficulty swallowing, often need to drink with their chin resting on their chest but struggle from being required to overextend the twisting of their wrist in order to pour their drink into their mouth. People with limited dexterity struggle to hold their drink with straws in upright, which makes it difficult to connect their mouth with the straw, and this results in relying on another person, such as a nurse, to help in order to perform the activity of drinking. People drinking whilst travelling in vehicles struggle to hold drinking vessels steady due to unpredictable motion of the vehicle, resulting in spillages and making it difficult to connect their mouth with the drinking vessel. People drinking whilst reclining back in a chair or resting horizontally in a bed, who may or may not be physically weak, struggle to carefully control the tilting of the drinking vessel at the same time as absorbing its weight and this results in spillages and tiredness from over concentration.

### 3. DESCRIPTION OF PRIOR ART

Liquid-dispensing containers such as specialist drinking vessels that help people who find conventional drinking vessels difficult to use, often referred to as 'daily living aids', are known in the prior art, however they do not provide a liquid-dispensing container that comprises of a handle and a vessel configured to pivot about an axis and that together form a single gimbal joint.

Liquid-dispensing containers that use gimbals to stabilise drinking vessels are known in the prior art, like from DE202008000979U, however, they do not provide the combination of all the features of claim 1, such as the combination of a liquid-dispensing container (a). that has a handle that is configured to be held by a user that is attached to a side of a vessel by a joint the comprises of a low friction bearing, (b) that forms a single gimbal configuration between the handle and the vessel, (c) that allows the handle to pivot about a single axis as opposed to multiple axis,(c) that enables the handle to rotate 360° about the said xis; (d) that has the handle attached to the side of a vessel by a single joint, (e) that includes a low friction bearing such as a ball bearing, roller bearing or bush placeed between the handle and the vessel (f) that includes the accompaniment of a baffle to reduce liquid sloshing, (g) that includes the accompaniment of a lid.

U.S. Pat. No. 4,437,636, issued to Anthory Mazzurco & Richard L. Miller on Mar. 20, 1984, discloses a Self-Orientating Fluid Container Device which includes a handle and a pair of gimbals that stabilise the drinking vessel when resting on a surface. It also includes a locking mechanism that locks the gimbals when the device is lifted vertically by the handle, i.e. when a user wants to drink from the drinking vessel, he/she lifts the handle at a 0 degrees tilt to the vertical, which locks the gimbal to allow drinking. Unlike the present invention, the invention of the '636 patent (a) only stabilises the drinking vessel when it rests on a surface, (b) uses a two axis gimbal structure as opposed to a single axis gimbal structure and (c) doesn't include the use of ball-bearings to reduce frictional contact.

G.B. Pat. Application. GB071314.5, submitted by Christopher J. Peacock on July, 7 2007, discloses a Stabilising and Locking Device which includes a handle attached within a set range of points to an outer ring that pivots about a middle ring that orthogonally pivots about a cradle within which a drinking vessel resides, and all parts made with such dimensions to enable the mechanism to lock when the handle is sufficiently turned to pour drinks into users' mouths. Unlike the present invention, the application GB071314.5 incorporates (a) a two axis gimbal as opposed to a single axis gimbal structure, (b) a locking feature, and (c) the restriction that the handle is unable to be rotated fully by 360° due to the locking feature of the device.

PCT. Pat. Application. WO 97/25271, submitted by Friedman on 31, December 2006, discloses a Multi-Chamber Liquid Pouring Apparatus which includes a device to hold and pour two or more different liquids. Unlike the present invention, the application WO 97/25271 (a) has multiple handles, (b) comprises of handles that move about an axis that is orthogonal to the axis in the said invention, (c) doesn't use a low-friction bearing, and (d) is limited to a jug rather than a drinking cup.

C.N. Pat. Application. CN101461634, submitted by Qiang on 19, December 2007, discloses a cup with a handle that can be placed in a standard position for drinking, then moved to a 180 degress upside down position for carrying the cup when on the move. Unlike the present invention, the application CN101461634 (a) is intended for only 2 positions, (b) doesn't move freely under a low-friction bearing, (c) doesn't use a ball bearing, roller bearing or bush.

U.S. Pat. No. US2007/0012707, submitted by Rattay on 14, July 2005, discloses a vessel with handle that pivots up and down besides the vessel. Unlike the present invention, the invention of patent '707, (a) doesn't include the use of a low-friction bearing, so is unable to properly counteract hand tremor, (b) doesn't use a ball bearing, roller bearing or bush, (c) comprises of handle that doesn't move 360 degrees about the axis in which it is attached to the vesel, (d) comprises of a handle that moves about an axis orthogonal to the axis in the present invention, such that the handle moves up and down as opposed to tilting besides the vessel, (e) comprises of a handle attached to the side of a vessel by two joints as opposed to a single joint, and (e) comprises of a handle that moves over the top of the vessel, as opposed to moving to the side of the vessel, and (f) makes the activity of carrying the cup easier as opposed to making the activity of drinking easier.

PCT. Pat. <Application. US6269949, submitted by Gottlieb on 10, May 2000, discloses a stackable beverage container with a handle joined to the vessel at two points, that resides flush to the vessel when drinking, and thus the handle is not used for drinking, and when wishing to carry the vessel, the handle can be rotatated above the vessel to more easily carry. Unlike the present invention, the invention of patent '949 (a) doesn't include the use of a low-friction bearing, so is unable to properly counteract hand tremor, (b) doesn't use a ball bearing, roller bearing or bush, (c) comprises of a handle attached to the side of a vessel by two joints as opposed to a single joint, (d) comprises of a handle that moves over the top of the vessel, as opposed to moving to the side of the vessel, (e) comprises of a handle that is used for carrying the cup, not for drinking, (f) comprises of a handle that is intended primarily to be used in two positions in the upward position for carrying and the lower position for drinking, as opposed to multiple positions, and (f) makes the activity of carrying the cup easier as opposed to making the activity of drinking easier.

Liquid-dispensing containers that use single gimbals to dispense liquid in the field of industrial machinery are known in the prior art, with particular reference to a blast furnace ladle for containing molten iron; however, they do not provide a liquid-dispensing container (a) that has a handle that can be held by a user, (b) can be used as a household appliance, such as for the activity of drinking, and (c) requires a handle to be held by a user in close proximity, such as within 20 cm, to the centre of gravity of the liquid-dispensing container.

The following patent documents pertaining to drinking vessel holders with gimbals (a) don't have handles that can be held by a user, so the device cannot be lifted to drink from, (b) they don't have a single axis gimbal structure, (c) they don't incorporate the gimbal inside the handle and (d) they don't use ball bearings to reduce frictional contact. Even when they have shafts for holding the gimbal mechanism, and even if such shafts were used as handles, they would not operate in the same way as the present invention because (a) they comprise of a two axis gimbal structure as opposed to a single gimbal structure and (b) are not held in place with the mechanism as detailed in the present invention. These patents are U.S. Pat. No. 2003/0,197,104, which issued to Randy Heybl & Brett Keshtkar on Oct. 23, 2003 and discloses a Gimballed and Adjustable Beverage Holder; U.S. Pat. No. 5,664,718, which issued to Michael P. Vine on Sep. 9, 2007 and discloses a Drink Holder; U.S. Pat. No. 5,489,055, which issued to Dror Levy on Feb. 6, 1996 and discloses a Cup Holder for Automobile; U.S. Pat. No. 5,340,006, issued to Tianhou Li on Aug. 23, 1994, discloses a Head-Supported Cup Holder which includes apparatus strapped to the user's head that supports a middle ring and an inner ring acting as a drink holder; U.S. Pat. No. 4,819,843, issued to Hiromichi Nakayama on Apr. 11, 1989, discloses a Drink Container Holder which includes a mounting ring having a gimbal structure within it with a middle ring and a cradle.

None of the above inventions and patents, taken either singly or in combination, is seen to describe the instant invention as claimed. Their respective defects as mentioned above are overcome by our invention as described forthwith.

### STATEMENT OF INVENTION

A household liquid-dispensing container such as a drinking vessel, flask or a jug comprising of a vessel that is configured to hold a liquid and that has a base on which it can stand, an opening and at least one side; and a handle that is configured to be held by a user and that is attached to a side of the vessel by a joint that comprises a low friction bearing and forms a single gimbal between the handle and the vessel and that allows the handle to pivot about a single axis that extends directly above the centre of gravity of the vessel when the vessel base is standing on a horizontal surface.
wherein the handle is attached to a side of the vessel by a single joint

### SUMMARY OF THE INVENTION

The present invention discloses a household liquid-dispensing container, such as a drinking vessel or a job, incorporating a mechanism for holding a device in such a way that the vessel is stabilised using gravity when held in mid-air and that enables the vessel to be tilted easily into the mouth despite the handle remaining in its chosen: position. It is complemented with a baffle to reduce liquid sloshing and a lid with a hole to drink through and to hold a drinking straw in place in the vessel.

One embodiment according to the present invention comprises of a vessel that is configured to hold a liquid and that has a base on which it can stand, an opening and at least one side; a shaft attached to the side of the vessel; a handle with a corresponding shaft recess, that is placed upon the shaft; a ball bearing placed between the shaft and the handle to ensure a low friction joint; a clip placed onto the shaft that engages with a projection within the recess in the handle to hold the handle captive on the shaft; and a cap to present contact with the mechanism. The handle is configured to be held by a user and is attached a side of the vessel by a joint that forms a single gimbal between the handle and the vessel and that allows the handle to pivot about a single axis that extends directly above the centre of gravity of the vessel when the vessel base is standing on a horizontal surface. The handle can rotate 360° about the said axis. The device is used in conjunction with an optional baffle to reduce liquid sloshing; and a lid to hold a straw, reduce the flow of liquid and keep the fluid close to its desired temperature.

Another embodiment of the liquid-dispensing container according to the present invention is to replace the use of the ball bearing with a second larger rim inside the shaft recess in the handle, which may be made of low friction material, e.g. a fluorethylene polymer.

Another embodiment of the liquid-dispensing container according to the present invention, comprises of a vessel with a base, an opening and at least one side; a ball-bearing; a shaft attached to a side of the vessel, that the ball bearing is placed upon, but in this case the shaft has a click fit configuration at its tip in order to hold the ball-bearing captive; a handle which has a corresponding recess to hold the ball-bearing; and a nut that is screwed into the opening of the handle recess to hold the ball-bearing in place. Like other embodiments of the present invention, this creates a joint that forms a single gimbal between the handle and the vessel that allows the handle to pivot about a single axis that extends directly above the centre of gravity of the vessel when the vessel base is standing on a horizontal surface.

The advantages of the present invention are as follows: (a) the unwanted effect of tremor and unpredictable motion from drinking whilst moving in vehicles, in destabilising the liquid-dispensing container is minimised, because the vessel remains relatively upright under the force of gravity, whilst the handle is freely moving with the tremor or the motion of the vehicle; (b) the vessel remains upright under the force of gravity making it easier for people with limited dexterity to connect their mouth with the straw and not spill the liquid outside the vessel; (c) one hand can take the weight of the liquid-dispensing container with one hand holding the handle, whilst the other controls the tilting of the vessel, which may or may not have a straw in; thus making it easier for the user to connect their mouth with the straw or vessel, and consume the desired amount of liquid, without the need to tilt the hand or neck, thus minimizing pain in the wrist and neck, as well as increasing control over the tilting of the vessel for users with limited strength or for those who are reclining; (d) likewise, the vessel can be brought to the mouth and the rim of the vessel can be levered against the edges of the top lip of the user's mouth to enable easy pouring just by lifting the handle vertically upwards; (e) for people who use a straw, the vessel with a straw placed in it can easily be tilted to ensure the straw is easy to connect the user's mouth with. Thus tremor, joint pain, limited dexterity, unwanted movement from vehicle travel and tilting a vessel whilst a user recline are overcome in the present invention.

### BRIEF DESCRIPTION OF THE DRAWING FIGURES

The figures on the drawings are briefly described as follows:
**FIG. 1** is a perspective view of one embodiment of the present invention, with both a lid assembly and a baffle assembly placed inside a cup assembly;
**FIG. 2** is an exploded view of the three assembled parts that the device in **FIG. 1** comprises of, including the lid assembly, the baffle assembly and the cup assembly.
**FIG. 3** is a perspective view of the cup assembly of the device in **FIG**. **1****,** without the lid and the baffle inside the cup assembly.
**FIG. 4** is a perspective view of the cup assembly of the device in **FIG. 1** when the handle has been rotated, to illustrate the handle's degree of rotational freedom about the vessel and how the vessel can remain upright due to gravitational forces despite the handle being rotated.
**FIG. 5** is a perspective view of the cup assembly of the device in **FIG. 1** when the vessel has been rotated, in this case to illustrate the vessel's degree of rotational freedom about the handle and how the handle can remain in one position whilst the vessel is tilted.
**FIG. 6** is a side cross-sectional view of the cup assembly of the device in **FIG. 1** to illustrate the mechanism that connects the handle to the vessel in a low friction manner.
**FIG. 7** is an exploded view of the cup assembly of the device in **FIG. 1****.**
**FIG. 8** is a perspective view of the baffle assembly of the device in **FIG. 1**.
**FIG. 9** is a top view of the baffle assembly of the device in **FIG. 1****.**
**FIG. 10** is an exploded view of the baffle assembly of the device in **FIG. 1****.**
**FIG. 11** is a perspective of the lid assembly of the device in **FIG. 1****.**
**FIG. 12** is an exploded view of the lid assembly of the device in **FIG. 1****.**
**FIG. 13** is a side view of the lid assembly of the device in **FIG. 1****.**
**FIG. 14** is a cross-sectional view of the lid assembly of the device in **FIG. 1****.**
**FIG. 15** is a side view of an alternative embodiment of this invention that uses no ball bearings.
**FIG. 16** is a perspective view of a further embodiment of this invention.
**FIG. 17** is a side view of the device in **FIG. 16****.**
**FIG. 18** is a cross-sectional view of the device in **FIG. 16****.**
**FIG. 19** is an exploded view of the device in **FIG. 16****.**

### DETAILED DESCRIPTION

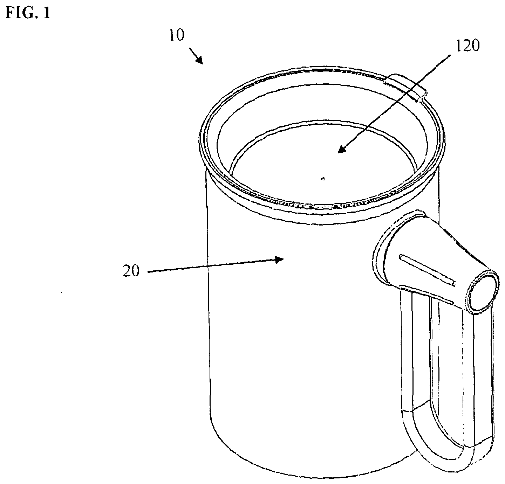

**FIGS. 1-14** show one embodiment of the invention **10** in accordance with the present invention comprising of a cup assembly which is arranged to look and feel like a standard bone-china coffee cup; a baffle assembly; and, a lid assembly. The device according to the present invention can be arranged for use with many varieties of drinking vessel types, sizes and shapes; and can be used with and without the baffle assembly and lid assembly. To this end the present invention has a capacity of 1 litre or less, e.g. 0.8 litres or less, such as 0.6 litres or less and a capacity of at least 0.1 litres, e.g. at least 0.2 litres, such as 0.3 litres.

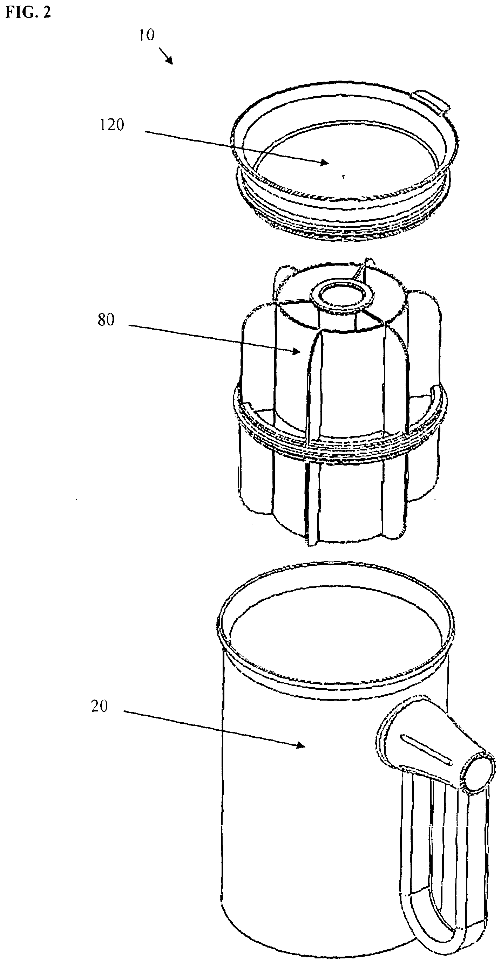

The device **10** comprises of three assembled parts, namely a cup assembly **20,** a baffle assembly **80** and a lid assembly **120.** **FIG. 1** illustrates the device **10** when the baffle assembly **80** and the lid assembly **120** are placed inside the cup assembly **20.** As can be seen, the baffle assembly **80** is hidden from view by the cup assembly **20** and the lid assembly **120.** **FIG. 2** illustrates the device **10** when with the baffle assembly **80** is positioned directly above the cup assembly **20,** such as might be seen before or after the baffle assembly **80** is placed inside the cup assembly **20.** Likewise **FIG. 2** illustrates the device **10** when the lid assembly **120** is positioned directly above the cup assembly **20,** such as might be seen before or after the lid assembly **120** is placed inside the cup assembly **20.**

The cup assembly **20,** as illustrated in **FIGS. 1-7****,** comprises of a vessel **30,** a ball-bearing **40,** a handle **50,** a clip **60** and a cap **70.** The vessel **30** is configured to hold a liquid and has a base **37** on which it can stand, an opening **39** and at least one side **38.** The handle **50** is configured to be held by a user and is attached to a side **38** of the vessel **30** by a joint that forms a single gimbal between the handle **50** and the vessel **30** and that allows the handle **50** to pivot about a single axis **21** that extends directly above the centre of gravity of the vessel **30** when the vessel base **37** is standing on a horizontal surface.

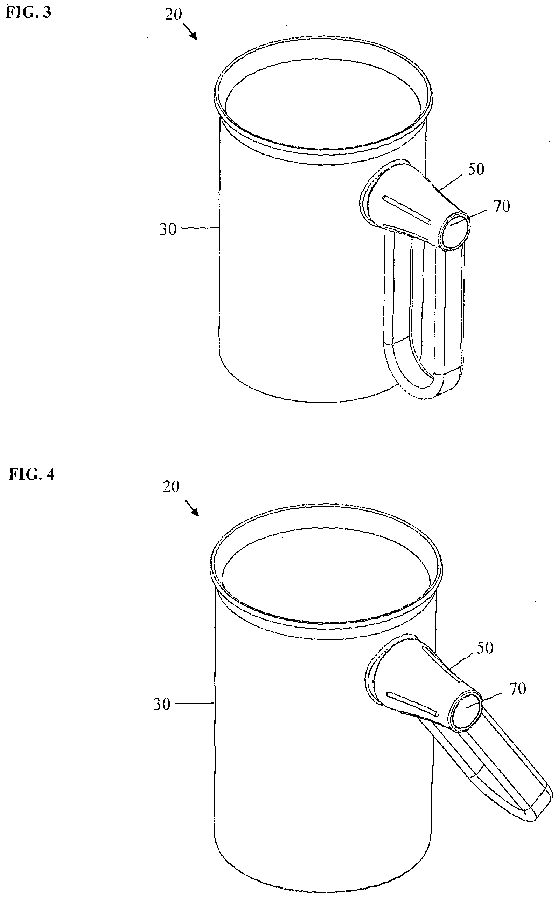

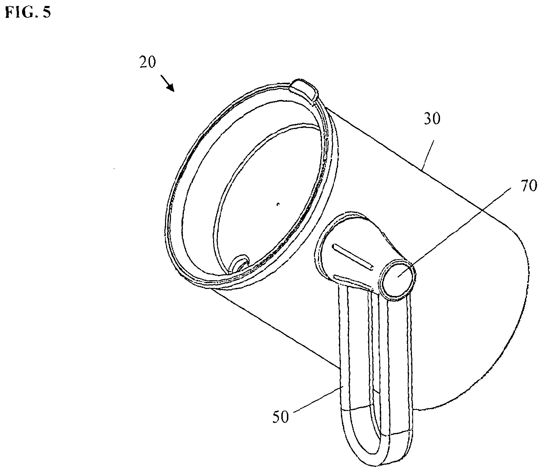

**FIG. 3** is a perspective view of the vessel **30** and the handle **50** in its neutral position. **FIG. 4** illustrates how the handle **50** can be rotated about an axis **21** and how the vessel **30** can remain upright under the force of gravity. This is particularly useful for people who find it difficult to hold drinking vessels upright and also for people with tremor who find it difficult to keep their drinking vessels steady. The gravitational force thus counteracts twisting motion in the handle due to tremor or holding the handle in an alternative positions by the user, and this is enhanced by the joint between the handle **50** and the vessel **30** configured to be held captive to one another in a low friction manner. **FIG. 5** illustrates how the handle **50** can be held in a desired position by the user, such as in a vertically upright direction, and the vessel **30** be pivoted about the axis **21;** and this pivoting happens by either by the user's other hand turning the vessel or by the user levering the rim **36** of the vessel **30** by using the sides of the upper lip of their mouth. This is particularly useful for people who find it painful or difficult to twist their wrists and tilt their head back, as is required when using conventional drinking vessels.

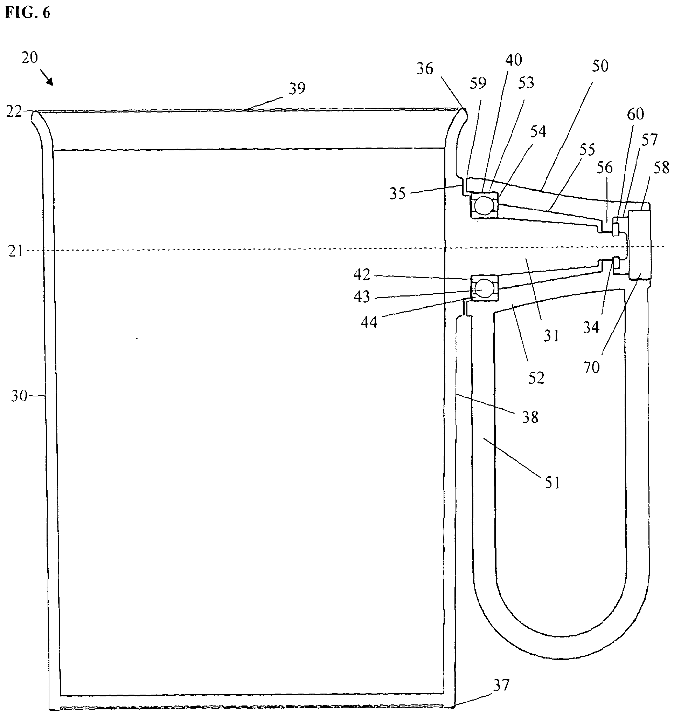

**FIG. 6** is a cross-sectional side view of the cup assembly **20** and illustrates the mechanism that enables the handle **50** to pivot about the vessel **30** in an axis **21** to form a single axis gimbal and to be connected together in a low friction manner. The vessel **30** has a shaft **31** that ensures the axis of rotation between the vessel **30** and the handle **50** is directly above the centre of gravity of vessel **30** when the vessel base **37** is standing on a horizontal surface.

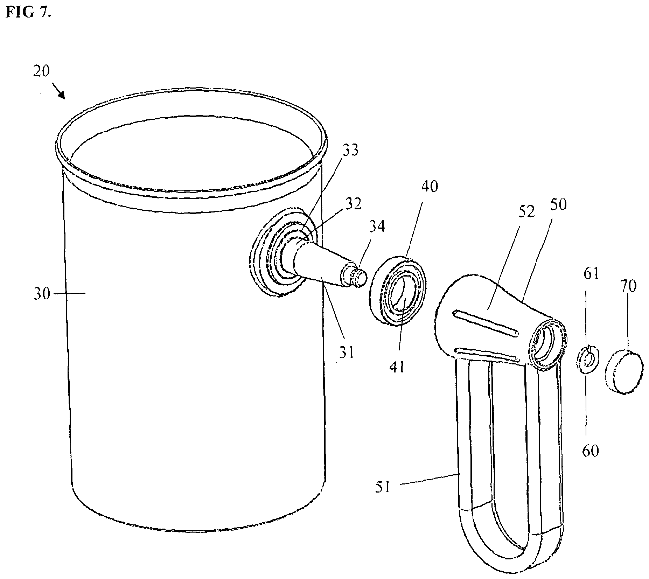

As illustrated in **FIG. 6** and the exploded view of the cup assembly **20** in **FIG. 7****;** a ball bearing **40** is pushed fitted on to the vessel shaft **31,** so that the inside face of the ball-bearing **41** fits flush with the flat element of the vessel shaft near the base of the shaft **32;** and the exterior face of the ball bearing's inner-cage **42** is pressed against the shaft base contact face for the ball-bearing **33.** The ball-bearing **40** is now firmly in place and can only come loose if pulled directly away from the vessel **30.** The ball-bearing **40** may or may not be made from food safe non-metallic materials such as plastic and glass in order for it to be able to be self-lubricating, be placed in a dishwasher, be placed in a microwave and be still functional even after soaked and washed in a sink. The ball-bearing **40** is a standard ball-bearing consisting of an inner-cage **42** that holds a series of balls **43** which are held in place by a standard ball-bearing retainer and that connect to an outer-cage **43.**

In the present embodiment of this invention, the pivot axis **21** lies in a vertical plane that bisects the vessel **30** into two equal mass parts when the vessel base **37** is standing on a horizontal surface. The handle **50** consists of a handle loop **51** to hold the cup assembly **20.** The handle loop **51** lies in a plane that also contains the pivot axis **21.** The handle loop **51** in the present embodiment of this invention is a closed loop that extends around 360° and is elongated in the vertical direction, thereby allowing the handle loop **51** to be grasped by all four fingers of a user's hand, which is particularly helpful for users with limited strength. The handle loop **51** is attached to a recess in the handle **52.** In other embodiments of the present invention the handle loop **51** may take the form of many shapes, which may or may not include a closed loop fitting as illustrated in the embodiment currently being described, for example the handle loop **51** could be an open loop, where the loop extends around at least 180°. Likewise, in other embodiments of the present invention, such as in the case of a wine glass, the handle loop **51** may not need to exist at all. However, in the majority of other embodiments of the present invention, a handle loop **51** is required.

The recess in the handle **52** includes a series of contours as follows; a ball-bearing outer-cage outside face receptor **53;** a ball-bearing outer-cage exterior face receptor **54;** a structural element **55;** a handle's shaft receptor rim **56;** a space creator **57 for** the clip **60;** and, a socket **58** to receive the cap **70.** These contours are unified in their respective radial distances fully about the axis **21**.

The recess in the handle **52** is placed over the vessel's shaft **31** and is pushed against the ball bearing **40.** The outside face of the ball bearing's outer cage **44** makes flush contact with the ball-bearing outer-cage outside face receptor **53** and the exterior face of the ball-bearing outer-cage **44** makes flush contact with the ball-bearing outer-cage exterior face receptor **54.**

The structural element **55** makes no contact with the vessel's shaft **31.** The handle's shaft receptor projection **56** makes frictional contact with the vessel's shaft **31** but there is a small gap between the two elements to ensure a low friction. connection. The clip **60** is made of flexible but strong material and is a ring shape with a gap **61** in it. This gap **61** enables the clip **60** to expand and shrink in diameter, as and when required. This clip **60** is pushed over the end of the vessel's shaft **31** and then resides in the fluid container's shaft clip receptor **34** which is a small groove. The space creator **57** ensures the clip **60** has sufficient space to expand when it is pushed over the end of the vessel's shaft **31.** The clip **60** has frictional contact with the handle's shaft receptor projection **56** but again there is a small gap between the two elements to ensure a low friction connection. This combination of elements thus connects the handle **50** to the vessel **30** in such a way that it remains held captive but free to pivot under low friction about an axis **21** to form a single axis gimbal. The weight of the vessel **30** and the fluid it contains is taken primary by the handle **50** through the ball bearing **40,** and this accounts for the low friction nature of the mechanism in the present embodiment of this invention; and this is why it's possible to have a frictional point of contact between the handle's shaft receptor projection **56** and both the vessel's shaft **31** and the clip **60.**

Finally a cap **70** is push-fitted into the recess in the handle **52** and makes contact with the socket **58**. This hides the mechanism as well as prevents user contact with the mechanism. In this embodiment of the present invention, the cap **70** remains permanently in the recess of the handle **52** and can't be removed. In variations of this embodiment of the cup assembly **20** the cap **70** could be a removable part.

The handle **50** can be fully rotated about the pivot axis **21** by 360 degrees. This is helpful for people who have limited dexterity and prefer to hold the cup **20** in unusual positions. The recess in the handle's opening **59** does not make contact with the wide base element of the vessel shaft **35.** Likewise the handle arm **51** doesn't make contact with the rim of the vessel **36.** The rim of the vessel **36** is shaped as shown to make a lip shape in order to make the activity of drinking more pleasant and to reduce the chance of liquid falling down the exterior side of the device **30.** The vessel base **37** consists of a small rim to enable the vessel **30** comfortably stand on a surface such as a table.

In a variation of this embodiment of the cup assembly **20,** a compliant seal can be placed between the handle **50** and the vessel **30** in order to prevent unwanted liquid and particles from entering the recess of the handle **52.** The seal would take the form of a rubber like material, but would have sufficient spacing between the compliant seal, the handle **50** and the vessel **30** so that the compliant seal would not prevent the handle **50** from moving freely about the vessel **30** in a low friction manner. However, the separate seal is not necessary if the gap between the vessel's shaft **31,** wide base element of the vessel shaft **35** and the handle **50** is kept sufficiently small and/or if the bearing **40** is itself sealed.

In a further variation of this embodiment of the cup assembly **20,** a second handle could be configured to be held by a user and that is attached to a side of the vessel **30** by a second similar joint that also forms a single gimbal between the second handle and the vessel and that allows the handle to pivot about the same single axis as the first handle.

In another variation of this embodiment of the cup assembly **20,** a roller-bearing or a bush can be used in place of the ball-bearing.

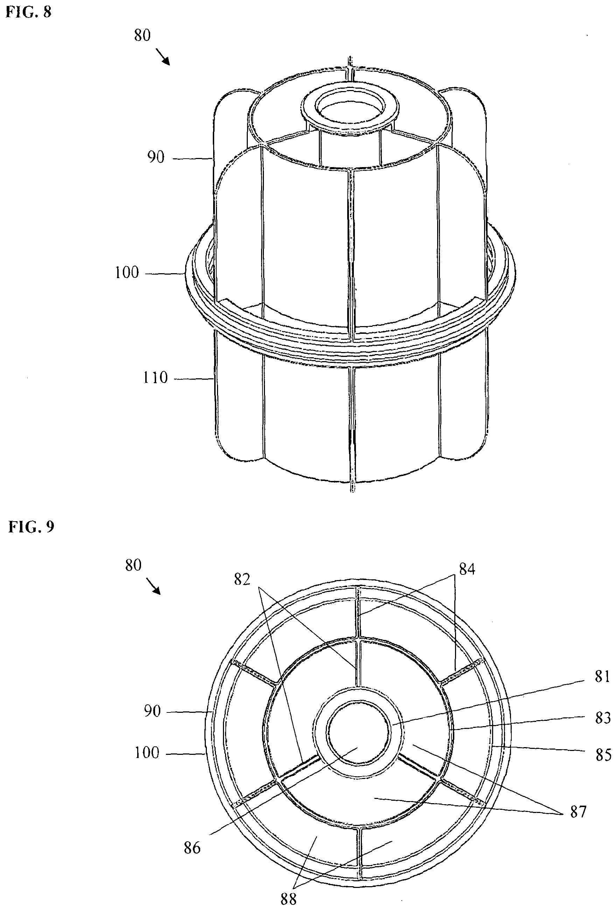

**FIG. 8** is a perspective view of the baffle assembly **80,** which comprises of an upper baffle part **90,** a compliant seal **100** and a lower baffle part **110.** The baffle assembly **80** is an optional element of the device **10** and is inserted to the cup assembly **20** in order to reduce sloshing of liquid. The baffle assembly **80** reduces sloshing through dividing the interior of the vessel **30** into multiple interconnecting chambers. Reducing sloshing of liquid is useful for when the cup assembly is moved with a sudden jolt of the hand, such as what happens when drinking in a moving vehicle, or if tremor movement is exerted on the cup assembly by the user.

The baffle assembly **80** is different to other baffle solutions for liquid-dispensing containers currently commercially available because (a) its compliant seal, **100** makes it easy to insert and extract from the cup assembly **20** and (b) it is has larger pockets of space, which assist with cleaning the baffle and putting finger tips in to insert and extract from the cup assembly **20,** and (c) the compliant seal **100** retains the baffle assembly **80** within the vessel. However, the baffle assembly **80** could be made without the compliant seal **100,** by making the baffle assembly **80** wider in order for it to engage the interior of the vessel **30,** thereby retaining the baffle assembly **80** within the vessel **30.**

**FIG. 9** illustrates a top view of the baffle assembly **80.** As can be seen, the baffle assembly **80** has an inner ring **81,** connected by interior walls **82** to a middle ring **83** which in turn is connected by exterior walls **84** to an outer ring **85.** This combination divides the fluid in the cup assembly **20** into chambers, namely, the inner chamber **86** within the inner ring **81;** the middle chambers of space **87** between the inner ring **81,** the interior walls **82,** and the middle ring **83;** and, the outer chambers **88** between the middle ring **83,** the exterior walls **84** and the outer ring **85.** When the baffle assembly **80** is partially or fully submersed in the fluid residing with the vessel **30** it confines the liquid within these respective chambers and thereby minimises the sloshing of the liquid out of the cup assembly **20.**

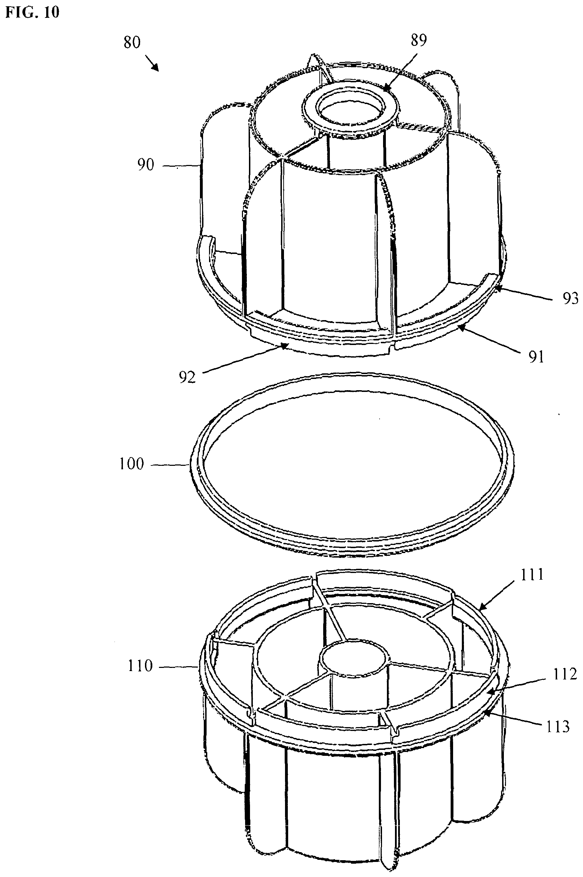

**FIG. 10** illustrates an exploded view of the baffle assembly **80.** The upper baffle part **90** becomes permanently fixed to the lower baffle part **110** by simply pushing the two parts together. This is made possible through a push fitting arrangement comprising of inner teeth **91, 111** and outer teeth **92, 112.** The upper baffle part **90** and the lower baffle part **110 in** the present embodiment are exactly the same shape and dimensions. The compliant seal **100** is made of a flexible material such as food safe silicon rubber and due to its elasticity can be stretched over the upper baffle part **90** or lower baffle part **110** and placed inside and be refined in the purpose made groove created by the outer teeth **92, 112**, and the outer rim **93, 113.** The overhanging rim **89** of the inner ring **81** enables the baffle to be gripped for easy inserting and extracting from the cup assembly **20,** and due to the surface area created, branding of the product can be placed here.

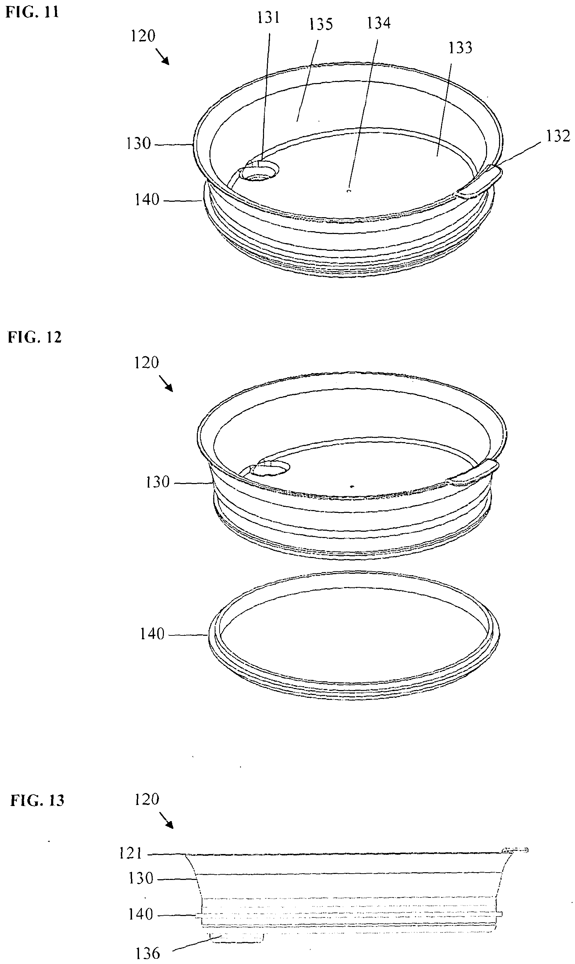

**FIGS. 11-14** illustrate an embodiment of the lid assembly **120** comprising of a lid part **130** and a compliant seal **140.** The compliant seal **140** makes the lid assembly **120** easy to insert and extract from the cup assembly **20,** as well as ensure liquid only escapes from the cup assembly **20** through the drinking hole **131** and the air hole **134.** The lid assembly **120** is also an optional element of the device **10** and is inserted to the cup assembly **20** in order to insulate the liquid and keep warm if the fluid is warm, or keep cold if the fluid is cold. It also serves to reduce the chances of spilling the drink accidently, gives a place to hold a standard sized disposable straw in an upwards direction and the lid assembly also enables increased control of the amount of liquid the user receives in their mouth. In a variation of the embodiment of the lid assembly **120**, the lid part **130** is shaped such that at least part of it can engage the interior of the vessel, thereby retaining the lid assembly within the vessel, without the use of the compliant seal **140.**

The drinking hole **131** is placed near the interior wall of the lid **135** to enable the fluid to be easily poured out of the device **10** and into the users' mouth. The drinking hole **131** is sized to easily fit and moderately hold a standard disposable drinking straw. A small ring **136** is positioned beneath the drinking hole **131** to guide and hold the drinking straw upright. The air hole **134** enables the fluid to easily flow out through the drinking hole **131.**

The interior wall of the lid **135** is curved to make pouring of the fluid easy as well as to aesthetically look similar to the inside of the cup assembly **20.** The tab **132** protrudes over the rim **22** of the cup assembly **20** to enable the lid assembly **120** to be easily extracted from the cup assembly **20,** as well as be twisted within the cup assembly **20** so that the drinking hole **131** is at the desired position for drinking. The upper surface of the lid **133** is slightly angled towards the drinking hole **131** to ensure excess fluid returns into the cup assembly **20.** The top rim of the lid assembly **121** is designed to fit flush with the rim **22** of the cup assembly **20**, and the rest of the lid assembly **120** is designed to reside below the rim **22** of the cup assembly **20,** so that apart from the tab **132,** the lid doesn't protrude from the cup and is more hidden from view when the container is viewed by the user from the side. The top surface of the lid **133** is sufficiently far beneath the top of the lid assembly **121** to not overly make contact with the users' upper lip of their mouth when the vessel **30** is tilted during the activity of drinking.

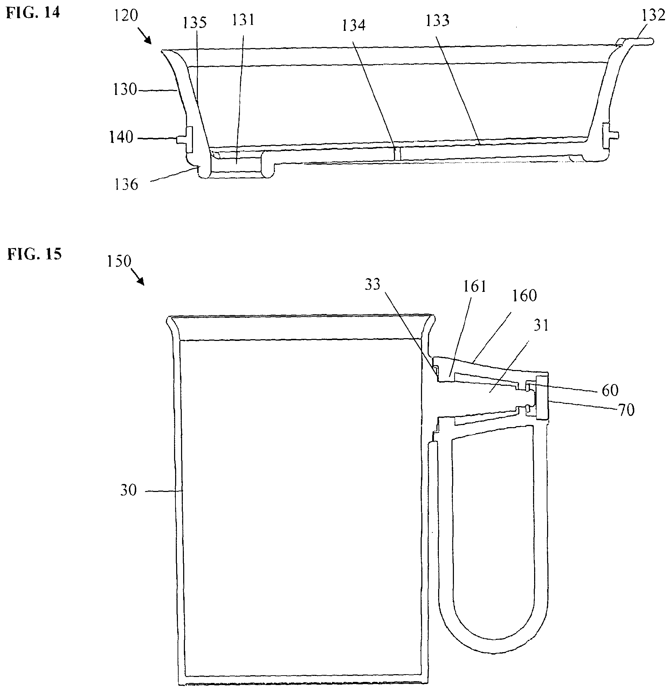

A second embodiment **150** of the original cup assembly **20** is illustrated in **FIG. 15****.** In this alternative embodiment **150,** there is no ball bearing **40** as it is replaced with a second projection **161** within the recess of the handle **52.** This second projection **161** makes frictional contact with the vessel's shaft **31** and the shaft base contact face for the ball-bearing **33.** However, a small gap between the second projection **161** and the vessel's shaft **31** is present in order to minimize friction. This second embodiment **150** could be made of a low friction material, e.g. a fluoroethylene polymer. In a variation of the alternative embodiment **150,** the vessel **30** can have a low friction material fixed on the vessel's shaft **31** and handle **160** can have a low friction material fixed in the recess of the handle **52.** The low friction material enables the joint to be a low friction bearing.

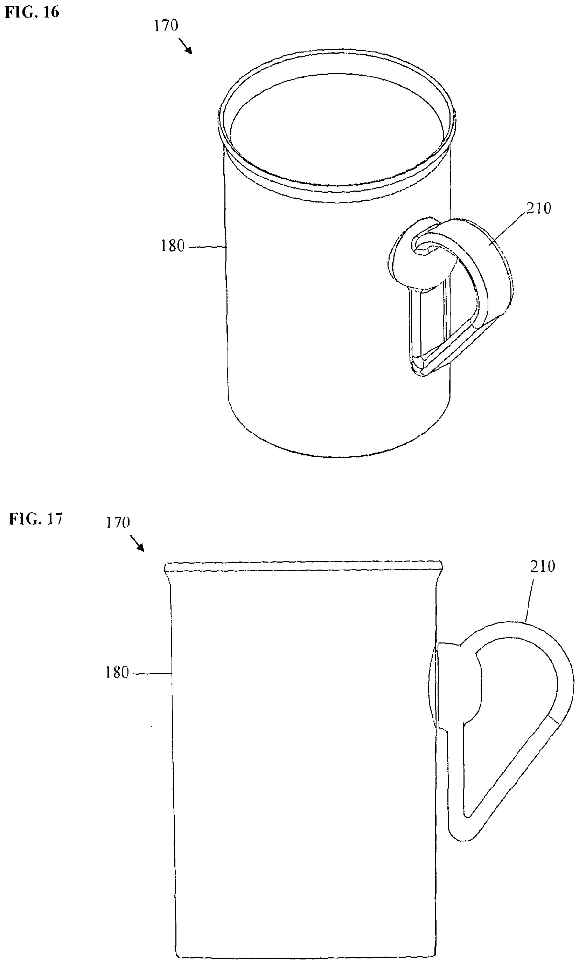

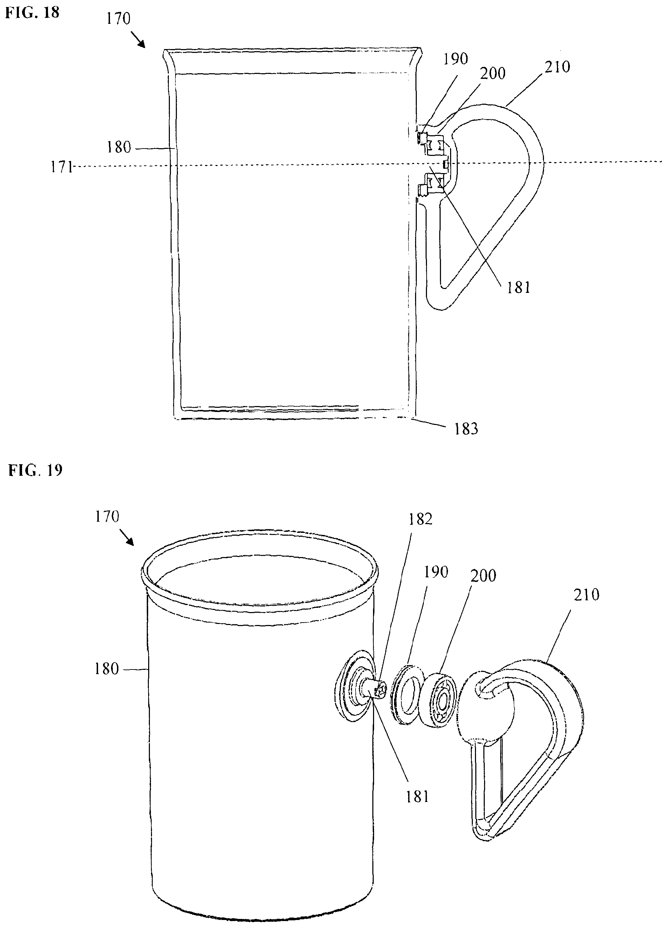

A third embodiment **170** of the original cup assembly **20** is presented is illustrated in **FIGS. 16-19****.** The third embodiment **170** comprises of an alternative vessel **180,** a nut **190,** a ball bearing **200** and a handle **210**. The handle **210** has a cavity within which the ball bearing **200** resides. The cavity opening has a screw groove that the nut **190** is screwed on to. This fixes the ball bearing in place. The handle **210,** with the ball bearing **200** and the nut **190** is pushed onto the vessel's shaft **181,** and is held in place by a click fit configuration **182** at the end of the vessel's shaft **181.** This enables the handle **120** to pivot about an axis **171** with the vessel **180** to together form a single gimbal, with the axis extending directly above the centre of gravity of the vessel when the vessel base **183** is standing on a horizontal surface, as well as remain captive to the vessel **180.**

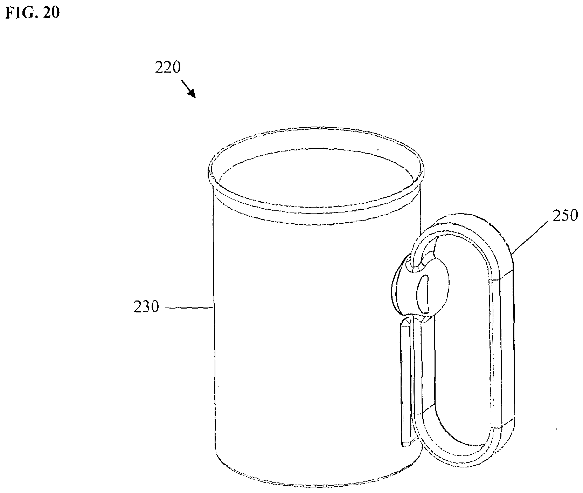

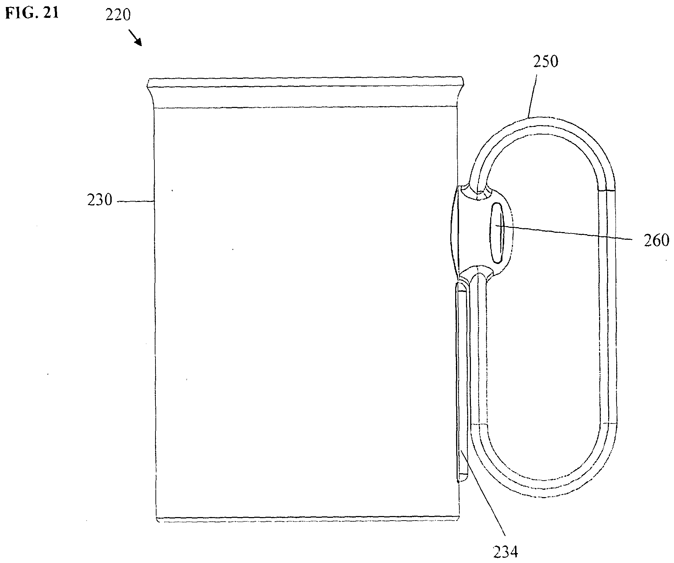

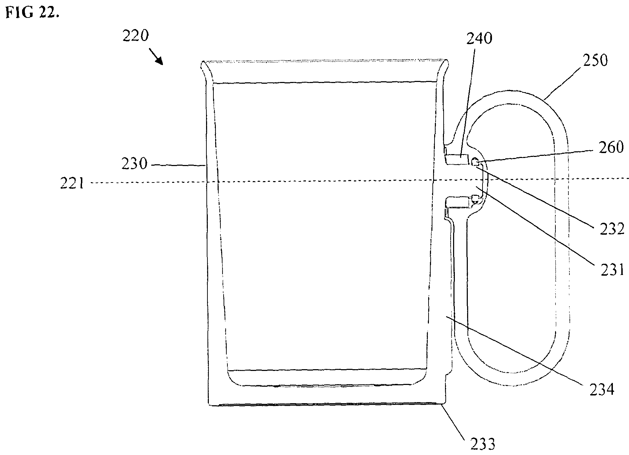

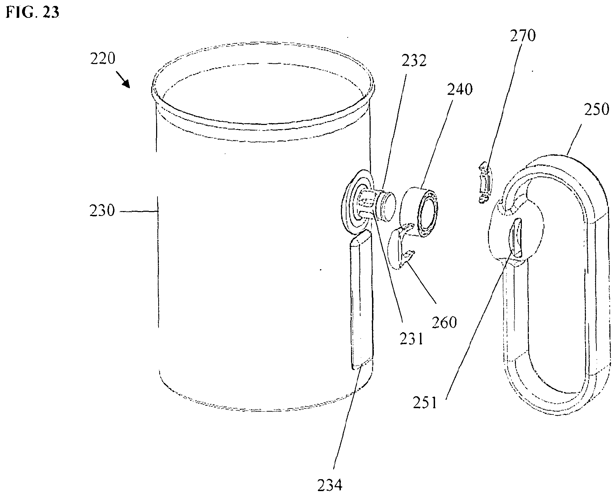

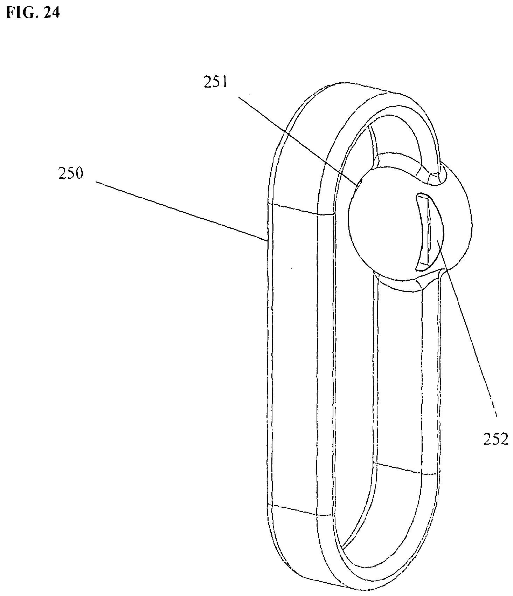

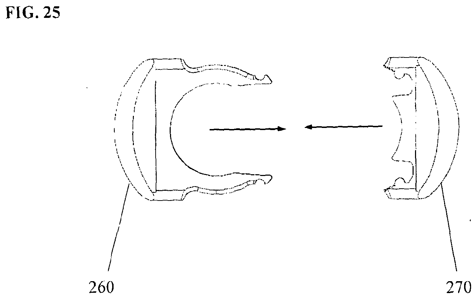

Turning now to a fourth embodiment of the present invention **220** of the original cup assembly **20** is presented in **FIGS. 20-25****.** The fourth embodiment **220** comprises of an alternative vessel **230,** a ball bearing **240,** a handle **250,** a male clip **260** and a female clip **270.** The handle **250** has a cavity within which the ball bearing **240** resides. The handle **250,** with the ball bearing **240,** is pushed onto the vessel's shaft **231,** and is held in place by entering the male clip **260** into the male clip receptor in the handle **251** and the female clip **270** into the female clip receptor **252** on the otherside of the handle. The male clip **260** and the female clip **270** make contact with the shaft groove **232** within the vessel's shaft **231** to *hold* the handle **250** captive to the vessel **230.** The male **260** and female clip **270** are configured to click fit into one another, so to ensure they remain captive to the handle **250.** This configuration enables the handle **250** to pivot about an axis **221** with the vessel **230** to together form a single gimbal, with the axis extending directly above the centre of gravity of the vessel when the vessel base **233** is standing on a horiztonal surface. It also enables the handle **250** to pivot about the axis **221** with a low level of friction. The vessel **230** also has a thumb pad **234** to enable the user's thumb to be placed on the thumb pad **234** to lock the vessel in relation to the handle **250** in order to provide an aditional and helpful method for tilting the vessel **230** when pouring its contents out.

The term "single gimbal" as used herein is intended to mean that the vessel **20** can rotate relative to the handle **50** about only one axis and is used in contrast to a double or multiple gimbals that allows the vessel to be rotated about two or more axes relative to the handle.

The terms "horizontal" and "vertical" are used herein to denote directions when the container is in its normal use and in particular when it is standing on a horizontal surface. It will be appreciated that such directions need not be exactly horizontal or exactly vertical.

## Claims

1. A household liquid-dispensing container such as a drinking vessel, flask or a jug comprising:
- a vessel that is configured to hold a liquid and that has a base on which it can stand, an opening and at least one side; and
- a handle that is configured to be held by a user and that is attached to a side of the vessel by a joint that comprises a low friction bearing and forms a single gimbal between the handle and the vessel and that allows the handle to pivot about a single axis that extends directly above the centre of gravity of the vessel when the vessel base is standing on a horizontal surface.
wherein the handle is attached to a side of the vessel by a single joint

2. A liquid container as claimed in any preceding claim, wherein the handle can rotate through 360° about said axis.

3. A liquid container as claimed in any preceding claim, wherein the joint comprises a shaft attached to a side of the vessel and a corresponding recess in the handle that accommodates the shaft in a manner that allows relative rotation between the handle and the shaft.

4. A liquid container as claimed in claim 3, wherein the handle is held captive on the shaft while allowing relative rotation between the handle and the shaft, for example by a clip or a projection provided on one of the handle or the shaft that engages with part of the other of the handle or shaft.

5. A liquid container as claimed in claim 1, wherein the low friction bearing comprises a ball bearing, a roller bearing or a bush.

6. A liquid container as claimed in any preceding claim, wherein the handle comprises a loop that lies in a plane that also contains the axis and optionally wherein:
the loop extends around at least 180° and optionally is a closed loop that extends around 360° and/or
the loop is elongated in the vertical direction, thereby allowing the handle to be grasped by all four fingers of a user's hand.

7. A liquid container as claimed in any preceding claim, wherein the joint is enclosed within a recess provided in the handle or in the side of the vessel.

8. A liquid container as claimed in any preceding claim, which has a capacity of 1 litre or less, e.g. 0.8 litres or less, such as 0.6 litres or less and a capacity of at least 0.1 litres, e.g. at least 0.2 litres, such as at least 0.3 litres.

9. A liquid container as claimed in any preceding claim, which has a second handle that is also configured to be held by a user and that is attached to a side of the vessel by a second joint that also forms a single gimbal between the second handle and the vessel and that allows the handle to pivot about the same single axis as the first handle.

10. A liquid container as claimed in any of claims 1 to 8, which has only a single handle.

11. A liquid container as claimed in any preceding claim wherein the axis lies in a vertical plane that bisects the vessel into two equal mass parts, when the vessel base is standing on a horizontal surface.

12. A liquid container as claimed in any preceding claim, wherein the handle is configured to rotate about said axis through 360° alongside the vessel.

13. A liquid container as claimed in any preceding claim, wherein the handle is an elongated complete or partial loop having a long dimension and a short dimension and the axis is generally orthogonal to the long dimension.

14. A liquid container as claimed in any preceding claim, wherein the handle is freely pivotable about the axis.

15. A liquid container as claimed in any preceding claim, which is in the form of a drinking vessel.

## Patentansprüche

1. Ein Haushaltgefäß, das Flüssigkeit abgibt, wie z.B. ein Trinkgefäß, eine Flasche oder ein Krug, zu dem gehört:
- ein Gefäß, das dafür ausgelegt ist, eine Flüssigkeit aufzunehmen und das eine Standfläche aufweist, auf der es stehen kann, eine Öffnung und mindestens eine Seite, und;
- ein Griff, der dafür ausgelegt ist, dass der Benutzer ihn anfasst und der an einer Seite des Gefäßes durch eine Verbindung angebracht ist, die ein friktionsarmes Lager umfasst und einen einfachen Tragbügel zwischen dem Griff und dem Gefäß bildet und der es gestattet, dass der Griff um eine einzelne Achse schwenken kann, die direkt über dem Schwerpunkt des Gefäßes herauskommt, wenn die Standfläche des Gefäßes auf einer horizontalen Oberfläche steht,
wobei der Griff durch einen einfachen Tragbügel an einer Seite des Gefäßes befestigt ist.

2. Ein Flüssigkeitsbehälter, wie in den vorhergehenden Ansprüchen beschrieben, bei dem der Griff sich um 360° um diese Achse drehen kann.

3. Ein Flüssigkeitsbehälter, wie in den vorhergehenden Ansprüchen beschrieben, bei dem die Verbindung eine Welle umfasst, die an einer Seite des Gefäßes angebracht ist und eine entsprechende Aussparung im Griff, in dem die Welle in einer Art und Weise angebracht ist, die eine relative Drehung zwischen dem Griff und der Welle gestattet.

4. Ein Flüssigkeitsbehälter, wie in Anspruch 3 beschrieben, bei dem der Griff auf der Welle festgehalten wird, während eine relative Drehung zwischen dem Griff und der Welle ermöglicht wird, z.B. durch eine Schelle oder eine Verlängerung, die auf dem Griff oder der Welle vorgesehen ist und die in ein Teil des Griffes oder der Welle eingreift.

5. Ein Flüssigkeitsbehälter, wie in Anspruch 1 beschrieben, bei dem das friktionsarmes Lager ein Kugellager, ein Rollenlager oder eine Buchse umfasst.

6. Ein Flüssigkeitsbehälter, wie in den vorhergehenden Ansprüchen beschrieben, bei dem der Griff eine Schleife umfasst, die in einer Ebene liegt und ebenfalls eine Achse enthält und bei der optional:
die Schleife mindestens 180° um den Behälter herumgeht und optional eine geschlossene Schleife ist, die 360° um den Behälter herumgeht bzw.
die Schleife in vertikaler Richtung verlängert wird, wodurch es möglich ist, dass der Griff mit allen vier Fingern der Hand des Benutzers umfasst werden kann.

7. Ein Flüssigkeitsbehälter, wie in den vorhergehenden Ansprüchen beschrieben, bei dem sich die Verbindung in einer Aussparung befindet, die im Griff oder in der Seite des Gefäßes vorgesehen ist.

8. Ein Flüssigkeitsbehälter, wie in den vorhergehenden Ansprüchen beschrieben, der ein Fassungsvermögen von einem Liter oder weniger besitzt, d.h. 0,8 Liter oder weniger, z.B. 0,6 Liter oder weniger und ein Fassungsvermögen von mindestens 0,1 Liter, d.h. mindestens 0,2 Liter, z. B. mindestens 0,3 Liter.

9. Ein Flüssigkeitsbehälter, wie in den vorhergehenden Ansprüchen beschrieben, der einen zweiten Griff aufweist, der ebenfalls so ausgelegt ist, dass er vom Benutzer gehalten werden kann und der an einer Seite des Gefäßes durch eine zweite Verbindung angebracht ist, die ebenfalls einen einfachen Tragbügel zwischen dem zweiten Griff und dem Gefäß bildet und die es gestattet, den Griff um die gleiche einzelne Achse zu schwenken wie beim ersten Griff.

10. Ein Flüssigkeitsbehälter, wie in einem der vorhergehenden Ansprüche 1 bis 8 beschrieben, der nur einen einzelnen Griff aufweist.

11. Ein Flüssigkeitsbehälter, wie in den vorhergehenden Ansprüchen beschrieben, bei dem die Achse in vertikaler Ebene liegt, die das Gefäß in zwei Teile mit gleicher Masse teilt, wenn die Standfläche des Gefäßes auf einer horizontalen Fläche steht.

12. Ein Flüssigkeitsbehälter, wie in den vorhergehenden Ansprüchen beschrieben, bei dem der Griff so ausgelegt ist, dass er sich um 360° um die genannte Achse entlang des Gefäßes dreht.

13. Ein Flüssigkeitsbehälter, wie in den vorhergehenden Ansprüchen beschrieben, bei dem der Griff eine verlängerte komplette oder teilweise Schleife ist, die eine lange und eine kurze Abmessung aufweist und die Achse ist im Allgemeinen rechtwinklig zur langen Abmessung.

14. Ein Flüssigkeitsbehälter, wie in den vorhergehenden Ansprüchen beschrieben, bei dem der Griff frei um die Achse schwenkbar ist.

15. Ein Flüssigkeitsbehälter, wie in den vorhergehenden Ansprüchen beschrieben, der die Form eines Trinkgefäßes besitzt.

## Revendications

1. Un contenant distributeur de liquide ménager tel que verre à boire, flacon ou cruche comprenant :
- un récipient configuré pour contenir un liquide avec un socle sur lequel il peut reposer, une ouverture et au moins un côté ; et
- une poignée configurée pour être tenue par un utilisateur, et reliée à un côté du récipient par une articulation comprenant un palier à faible frottement formant un support unique entre la poignée et le récipient et permettant à la poignée de pivoter autour d'un axe unique s'étendant juste au-dessus du centre de gravité du récipient quand le socle de ce récipient repose sur une surface horizontale,
où la poignée est reliée à un côté du récipient par une articulation unique

2. Un contenant de liquide selon la revendication précédente, où la poignée peut pivoter sur 360° autour dudit axe.

3. Un contenant de liquide selon la revendication précédente, où l'articulation comprend un axe relié à un côté du récipient et un logement correspondant dans la poignée qui reçoit l'axe de façon à autoriser une rotation relative entre la poignée et l'axe.

4. Un contenant de liquide selon la revendication 3, où la poignée est maintenue captive sur l'axe tout en autorisant une rotation relative entre la poignée et l'axe, par exemple par une agrafe ou un dépassement ménagé sur l'un ou l'autre de la poignée ou de l'axe et s'engageant sur une partie de l'autre élément correspondant poignée ou axe.

5. Un contenant de liquide selon la revendication 1, où le palier à faible frottement comprend un roulement à billes, un roulement à rouleaux ou une bague.

6. Un contenant de liquide selon une des revendications précédentes, où la poignée comprend une boucle située dans un plan contenant aussi l'axe et où facultativement : la boucle s'étend autour d'au moins 180° et facultativement se ferme pour s'étendre sur 360° et/ou la boucle est allongée dans la direction verticale, permettant de saisir la poignée avec les quatre doigts de la main d'un utilisateur.

7. Un contenant de liquide selon une des revendications précédentes, où l'articulation est enfermée dans un logement prévu dans la poignée ou dans le côté du récipient.

8. Un contenant de liquide selon une des revendications précédentes, d'une capacité de 1 litres ou moins, par exemple 0,8 litre ou moins, par exemple 0,6 litre ou moins et une capacité d'au moins 0,1 litre, par exemple au moins 0,2 litre, tel que au moins 0,3 litre.

9. Un contenant de liquide selon une des revendications précédentes, ayant une deuxième poignée aussi configurée pour être tenue par un utilisateur et reliée à un côté du récipient par une deuxième articulation formant aussi un support unique entre la deuxième poignée et le récipient, et permettant à la poignée de pivoter autour du même axe unique que la première poignée.

10. Un contenant de liquide selon une des revendications 1 à 8, n'ayant qu'une seule poignée.

11. Un contenant de liquide selon une des revendications précédents où l'axe se trouve dans un plan vertical divisant le récipient en deux parties de masse égales, quand le socle du récipient repose sur une surface horizontale.

12. Un contenant de liquide selon la revendication précédente, où la poignée est configurée pour pivoter autour dudit axe sur 360° le long du récipient.

13. Un contenant de liquide selon une des revendications précédentes, où la poignée est une boucle allongée complète ou partielle ayant un grand axe et un petit axe, et dont l'axe de rotation est essentiellement orthogonal à son grand axe.

14. Un contenant de liquide selon la revendication précédente, où la poignée peut pivoter librement autour de l'axe.

15. Un contenant de liquide selon une des revendications précédentes, sous forme de récipient à boire.
